# EUROPEAN PATENT APPLICATION

(11) **EP 4 488 109 A1**
(43) Date of publication of application: **08.01.2025**
(21) Application number: 23183960.6
(22) Date of filing: 06.07.2023
(51) Int. Cl.: B60L 53/80, B60K 1/04, B60L 58/40

(54) **HEAVY-DUTY VEHICLE COMPATIBLE WITH DIFFERENT POWER GENERATION TECHNOLOGIES**

(71) Applicant: Volvo Construction Equipment AB, 631 85 Eskilstuna (SE)
(72) Inventor: Kvist, Roland, 360 42 BRAÅS (SE); Örkenrud, Kim, 352 64 VÄXJÖ (SE); Ekman, Gordon, 342 63 MOHEDA (SE)
(74) Representative: Lavoix

(57) **Abstract**

The invention relates to a heavy-duty vehicle with an electric drive train. The vehicle features a receptacle at the front end, designed to receive a removable power generation module that provides power to the electric drive train. The electric drive train is compatible with various power generation modules, including a battery module, a battery swapping unit, a fuel cell module, and a generator module. This design allows for easy switching between power generations based on availability and cost, providing flexibility and adaptability for the vehicle's power needs.

## Description

### TECHNICAL FIELD

The disclosure relates generally to heavy-duty vehicles and associated electric drive train. In particular aspects, the disclosure relates to the compatibility between the power source and the electric drive train. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The transportation industry has been facing increasing challenges in recent years, particularly in terms of reducing emissions and improving sustainability. As a result, there has been a growing interest in developing vehicles that utilize alternative power generations, such as electric batteries, hydrogen fuel cells, and hybrid systems. These alternative power generations offer the potential for reduced emissions and improved fuel efficiency compared to traditional internal combustion engines.

However, the adoption of these alternative power generations has been hindered by several factors. One significant issue is the complexity and cost associated with producing vehicles with different power generations in parallel. Each power generation requires a unique vehicle design, which increases production costs and reduces overall efficiency. Additionally, the infrastructure for supporting these alternative power generations is not yet fully developed, which further complicates the production process.

Another challenge faced by vehicle operators is the inability to adapt to changing fuel costs and availability. With current vehicle designs, it is difficult to switch between different power generations based on the availability and cost of various fuels. This lack of flexibility can result in increased operating costs for vehicle operators, as they may be forced to use a more expensive or less efficient power generation due to the limitations of their vehicle's design.

Hybrid vehicles have been developed to address some of these issues by incorporating multiple power generations within a single vehicle. However, these vehicles still suffer from the limitations of their specific power generation configurations and do not allow for easy switching between different power generations based on changing circumstances.

Some old military vehicles had an internal combustion engine capable of working with different fuels, such as Gasoline and Diesel, but nothing has been developed so far for electric vehicles.

In summary, the prior art has not provided a satisfactory solution to the problems of inefficient production due to multiple power concepts, and the inability to adapt to changing fuel costs and availability. There is a need for a more adaptable vehicle design that allows for easier integration of different power generations and provides vehicle operators with the flexibility to switch power generations based on the availability and cost of different fuels.

### SUMMARY

According to a first aspect of the disclosure, a heavy-duty vehicle is provided, and comprises an electric drive train, including at least one electric motor, an interface for fitting a power generation module, said interface comprising at least one electrical connector to connect said power generation module to the electric drive train, and a controller that is capable of adapting the energy received by the electrical connector, so that it is possible to select the power generation module to be fitted among a battery pack module, a battery swapping module, a fuel cell module and a thermal generator module.

The first aspect of the disclosure may seek to provide a flexible and sustainable solution for powering electric heavy-duty vehicles. A technical benefit may include the ability to easily switch between different power generations based on availability, cost, and environmental factors.

Optionally in some examples, including in at least one preferred example, the controller includes a communication system capable of receiving information from the power generation module.

Optionally in some examples, including in at least one preferred example, said information includes at least one of the following parameters: voltage, power, state of charge, etc.

Optionally in some examples, including in at least one preferred example, the electrical connector includes a line or channel dedicated for communicating with the power generation module.

Optionally in some examples, including in at least one preferred example, said interface is provided at the longitudinal front end or rear end of the vehicle. The thing is that heavy-duty vehicles, contrary to small vehicles such as passenger cars, offer a good accessibility to the chassis and therefore are somehow well suited for the installation or removable of large components such as power generation module. In accordance with automotive standard, the longitudinal direction corresponds to the direction of movement of the vehicle. It has been found that in the end, the perfect location for fitting the power generation module was at the front of the vehicle in order to counterbalance for the weight of the superstructure, e.g. container.

Optionally in some examples, including in at least one preferred example, the heavy-duty vehicle further comprises a vehicle body and a chassis extending at the front beyond vehicle body so as to define a receptacle for the power generation module.

Optionally in some examples, including in at least one preferred example, the controller includes a transformer and/or a converter, e.g. rectifier or inverter. A technical benefit is that it is possible to plug a power generation module that delivers a voltage different from that used to power the electric motor(s) of the driveline. Also, it is possible to plug a power generation module that delivers DC (resp. AC) current even if the electric driveline works with AC current (resp. DC current). In addition, the controller can include a variable frequency drive.

Optionally in some examples, including in at least one preferred example, the vehicle is a construction equipment, such as loader, dump truck or a hauler.

Optionally in some examples, including in at least one preferred example, the vehicle comprises additionally a fuel tank, e.g. a Diesel tank or H2 - hydrogen - tank, fitted at a remote location from the interface for fitting the power generation module.

Optionally in some examples, including in at least one preferred example, the interface further comprises a fluid connector for fluidically connecting the fuel tank to the power generation module.

Optionally in some examples, including in at least one preferred example, the vehicle comprises additionally an electrical storage system, such as a battery pack module or battery swapping module, fitted at a remote location from the interface for fitting the power generation module, wherein said electrical storage system can be used as power source for the electric drive train.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is an exemplary side view of a heavy-duty vehicle according to an example.
FIG. 2 is an exemplary top view of a heavy-duty vehicle chassis with axles according to an example.
FIG. 3 is an exemplary power generation module according to an example.
FIG. 4 and 5 represent installation steps of the power generation module according to an example.
FIG. 6 is an exemplary front view of the vehicle according to an example.
FIG. 7 is an exemplary electrical architecture diagram of the vehicle according to an example.
FIG. 8 is an exemplary side view of a heavy-duty vehicle, especially a wheel loader, according to another example.

### DETAILED DESCRIPTION

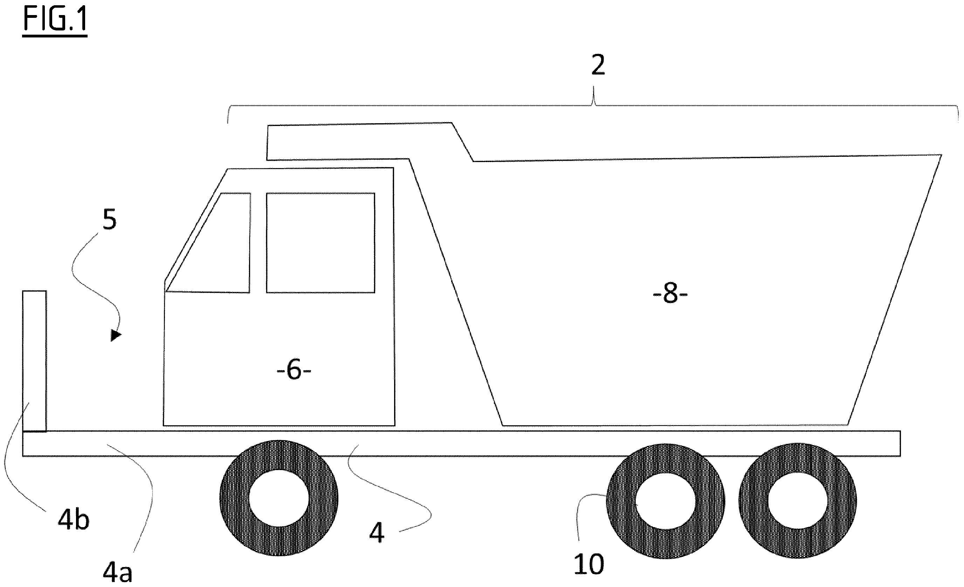

FIG. 1 is an exemplary side view of a heavy-duty vehicle 2. According to this example, the heavy-duty vehicle 2 to which it is referred to is a truck, e.g. dump truck. Alternatively, it can be any other heavy-duty vehicle such as a boat, a bus, armored/military vehicle or construction equipment such as a wheel loader, a rigid hauler or an articulated hauler.

The vehicle 2 includes a chassis 4 supporting a vehicle body 6 that is also known as the 'cab' and a superstructure (or Bodybuilder) 8 which in the example is a tipping basket, which can also be known as a 'container' or 'dump body'. The chassis 4 comprises a front end 4a and a bull-bar (or front guard) 4b.

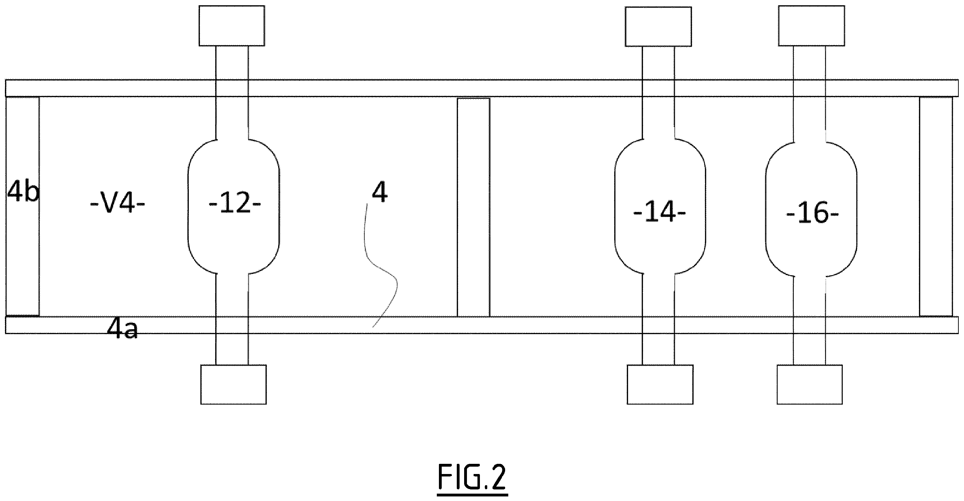

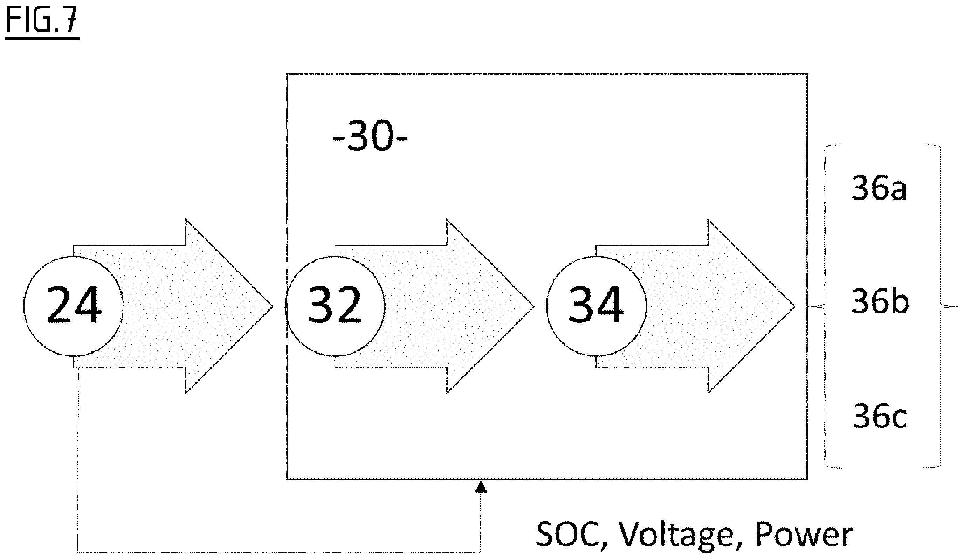

As shown on FIG. 2, three axles 12, 14 and 16 are fitted below the chassis 4. In the example, each one of the axles 12, 14 and 16 is provided with at least one electric motor 36a, 36b and 36c respectively that is capable of driving the wheels 10. As a result, axles 12, 14 and 16, which can also be known as 'E-axles', together form the electric drive train 36 (also known as 'driveline' or 'powertrain') of the vehicle 2 (cf. FIG. 7). In the example, the vehicle 2 is a 6 by 6 truck. Obviously, many other configurations can be implemented, such as a 6 by 2 or a 6 by 4 vehicle wherein only the rear axle(s) is driven. Also, it is possible to have the electric motor(s) remote from the axle and thereby to use a propeller shaft to transmit the torque.

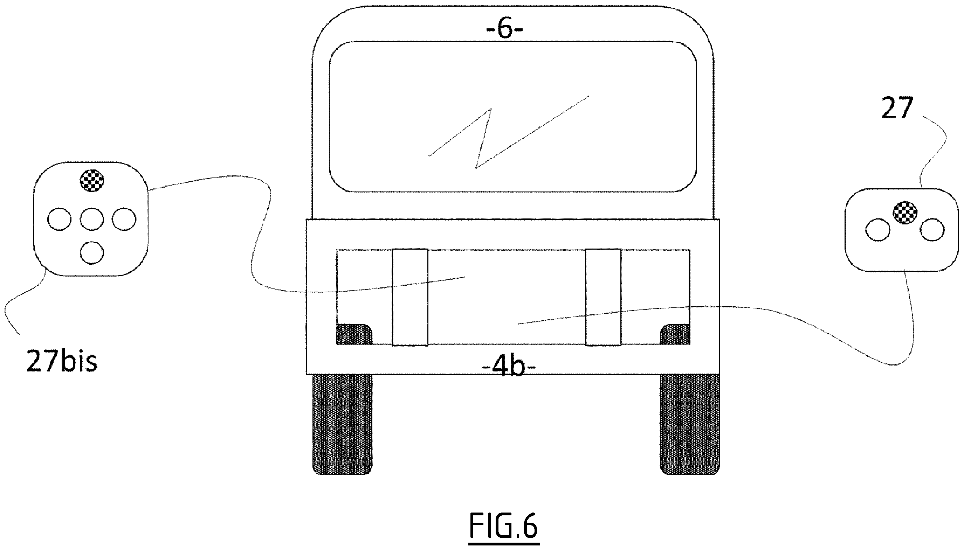

As shown on FIG. 6, the vehicle 2 also includes an interface for fitting a power generation module 18, said interface comprising at least one electrical connector, preferably two electrical connectors 27 and 27bis to connect said power generation module 18 to the electric drive train. Advantageously, the electrical connector 27 is an electrical socket dedicated for plugging a DC power source such as a battery pack and the electrical connector 27bis is an electrical socket dedicated for the plugging of an AC power source such as a generator recovering electric energy from an internal combustion engine.

Preferably, the interface to which it is referred to above is located at the longitudinal front end of the vehicle 2. This provides some good accessibility for the installation or removal of the power generation module. As a result, the vehicle is designed so that the power generation module can be removed and replaced without major issues, and especially without destructive steps.

As shown schematically on FIG. 7, the vehicle 2 also includes a controller 30 that is capable of adapting the input energy received by the electrical connector 27 or 27bis, so that it is possible to select the power generation module among a battery pack module, a battery swapping module, a fuel cell module and a thermal (or thermo-) generator module. In a variant not shown, the power generation module can be composed of two or more of the above-mentioned power generation module examples, which means that, for example, the power generation module can be composed of a battery pack module and fuel cell module, or a battery pack and a thermal generator module (as for Hybrid Electric Vehicles). Basically, any combination can be envisaged.

Preferably, the controller 30 includes a transformer 32 and/or a converter 34, e.g. rectifier or inverter. As a result, the controller 30 can transform the voltage of the power delivered by the power generation module 18 in order to adapt it to the input voltage requirements of the electric driver train. The controller 30 can also convert the voltage from AC to DC or inversely depending on the characteristics of the electric drive train.

Advantageously, the controller includes a communication system capable of receiving information from the power generation module 18. Typically, said information includes at least one of the following parameters: voltage, power, state of charge, etc. Basically, any communication means can be envisaged, including Ethernet, LAN, Bluetooth, etc.

Optionally the electrical connector 27 or 27bis includes a line or channel dedicated for communicating with the power generation module 18.

In addition, the controller can include a variable frequency drive that can be controlled to accelerate the vehicle.

Preferably, chassis 4 extends at the front beyond vehicle body 6 so as to define a receptacle 5 for the power generation module 18. In detail, said receptacle is partly enclosed by the chassis end portions 4a, 4b and vehicle body/cab 6.

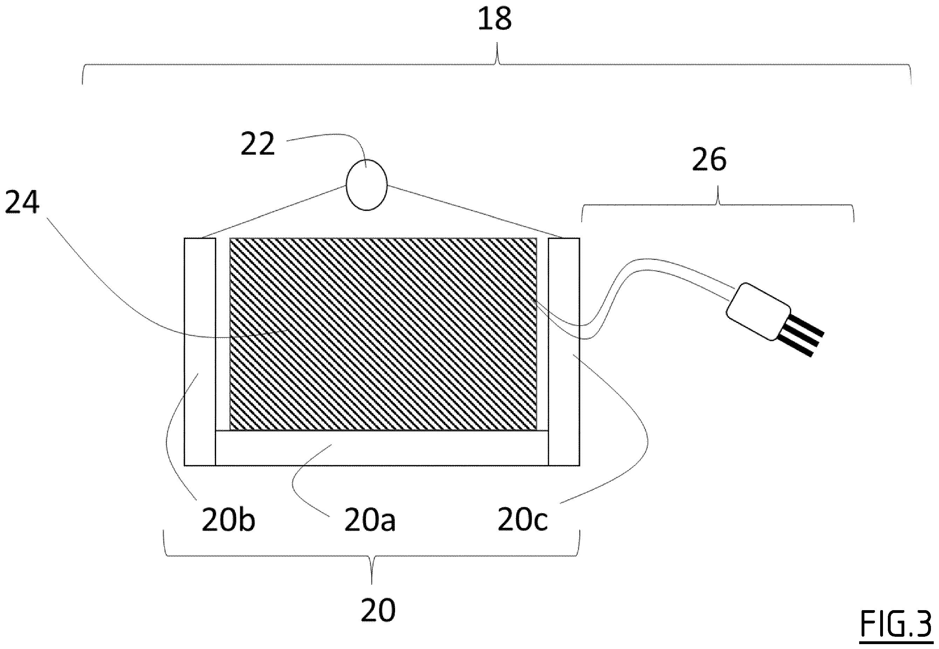

FIG. 3 shows an exemplary power generation module 18 comprising a support/frame 20 consisting of a bottom portion 20a and brackets 20b,20c. The side brackets 20b and 20c provide mechanical fastening points for fasteners 38 and 40, which are configured to fasten the power generation module 18 to the vehicle chassis 4 when the power generation module 18 is installed in the receptacle 5. Preferably, the power generation module 18 comprises a hook 22 that can be used for lifting and transporting the module 18.

Optionally, the frame 20 provides support for a power source or energy storage element 24, which can store the electricity for driving the electric drive train 36. Typically, in the example of a fuel cell module, the power generation module includes an electrolysis apparatus and possibly a H2 tank. In the example of a generator, the power generation module includes an internal combustion engine, a generator and possibly a fuel tank. Power generation module 18 also includes an electrical connector 26 to be plugged into electrical connector 27 or 27bis of the vehicle. In the example, the connector 26 is an electric plug comprising at least two conducting pins, respectively one for neutral and one for the phase. Alternatively, the connector 26 could comprise four conductive pins, respectively 3 pins for the phases and one for neutral.

In a variant not shown, specific to the case where the power generation module 18 is a generator, the fuel tank can be fitted remotely from the internal combustion engine and generator. Typically, it is possible to fit one or more fuel tanks on the sides of the chassis, which is the usual configuration for thermal trucks. As a result, the fuel tank does not really belong to the 'power generation module' to which it is referred to, which in this case only includes an internal combustion engine and a generator. This advantageously can help to distribute the weight on vehicle length and therefore avoid that most of the weight is concentrated at front.

The same applies to the case where the power generation module is a fuel cell module, since the H2 tank can also be fitted remotely/separately from the electrolyze apparatus/ hydrolyzer. As a result, the H2 tank does not belong to the 'power generation module' to which it is referred to, which in this case only includes the hydrolyzer (or electrolyze apparatus).

In such configurations/designs, the interface to which it is referred to also includes a fluid connector for supplying the internal combustion engine or hydrolyzer and the power generation module includes a complementary connector. All in all, this means that the power generation module to which it is referred to does not necessarily include a power source, e.g. a storage element.

According to another variant not shown, the heavy-duty vehicle 2 comprises additionally an Electrical Storage System (ESS), such as a battery pack module or battery swapping module, fitted at a remote location from the interface for fitting the power generation module 18. Said electrical storage system can be used as power source for the electric drive train 36a, 36b, 36c. As a result, this ESS can be used as a back up power source when there is no power generation module 18 or when the power generation module is not functioning (Fuel tank or battery module empty for instance). Alternatively, this ESS can be the main power source and the power generation module can be used as a backup.

For instance, the ESS can be fitted on vehicle chassis, as it is usual for heavy-duty vehicles such as trucks.

Another option is to use the ESS and power generation module simultaneously, in order to get more power for the electric drive train, which can be particularly useful for applications requiring a lot of energy/power.

Additional components can be provided on the power generation module 18, such as a cooling system and/or a Battery Management System (BMS) capable of transmitting information.

In addition, another conductive pin can be provided for transmitting information to the controller 30.

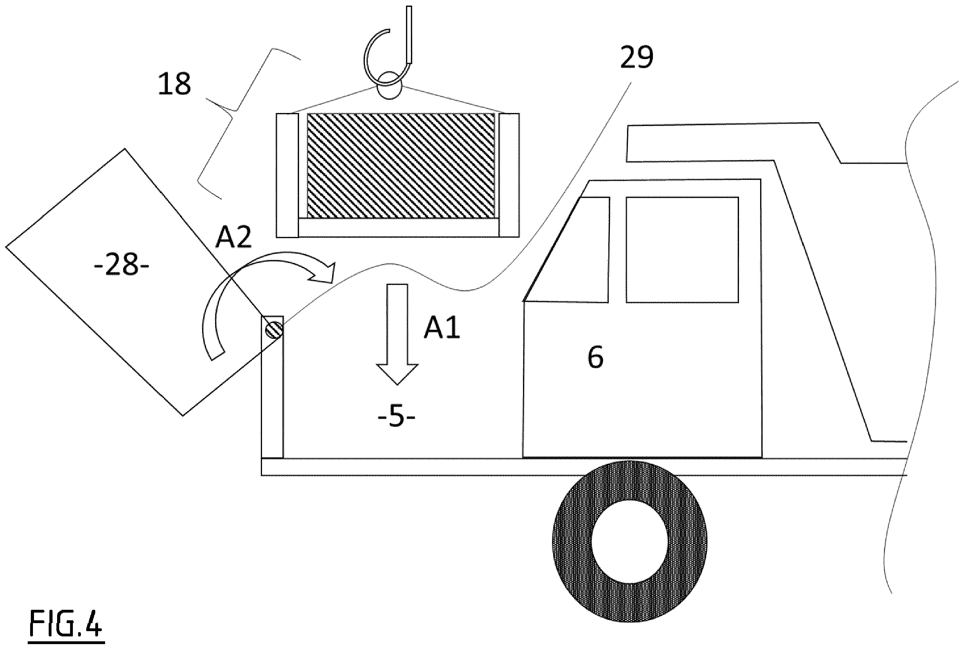

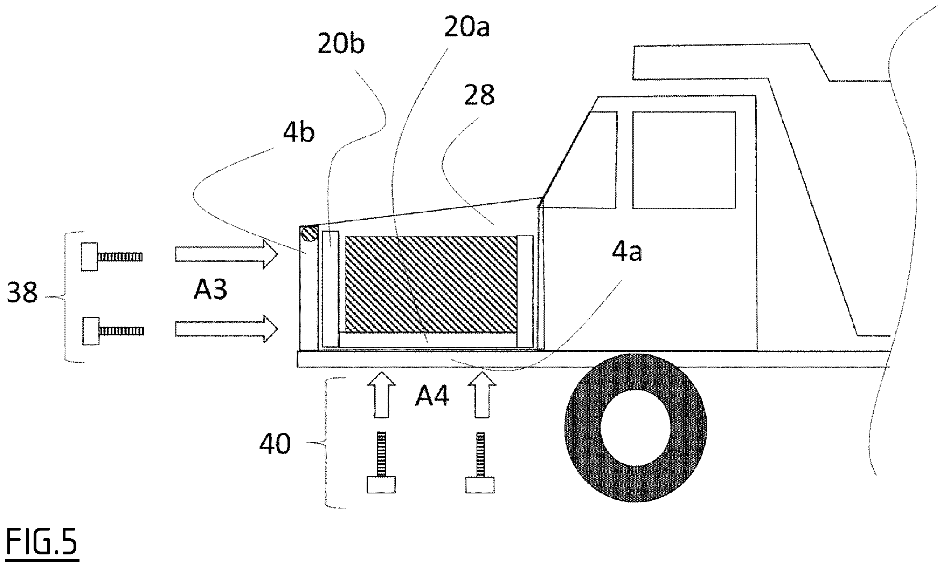

As shown on FIG. 4 and 5, the power generation module 18 can be lifted using the hook 22 and positioned above the receptacle 5. The vehicle 2 includes a hood 28 articulated at a point 29. The hood 28 allows to protect the power generation module 18 from the environmental aggression such as rain, snow, rocks, dust, etc. After having rotated/moved the hood 28 upwards, the power generation module can be moved down to fit into the receptacle 5.

Afterwards, the electric connector 26 is plugged into the corresponding socket 27 or 27bis and the power generation module 18 is fastened to the chassis 4. In detail, fasteners 38, such as bolts or rivets, are screw on the front side to fasten the bull-bar 4b to side bracket 20b of the frame 20 and fasteners 40, such as bolts or rivets, are screwed on the bottom side to fasten the end portion 4a of the chassis 4 to the bottom portion 20a of the frame 20.

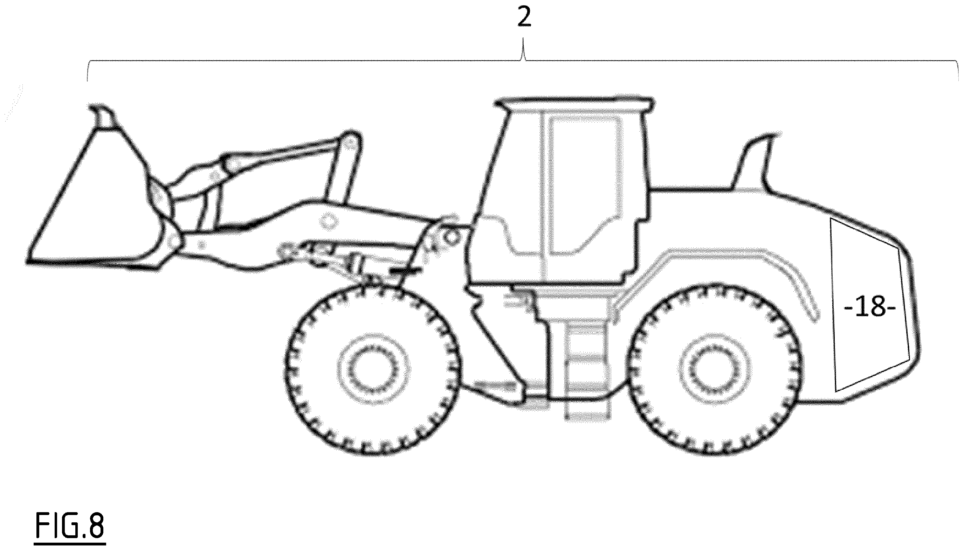

FIG. 8 shows another embodiment of the invention, in which the heavy-duty vehicle 2 to which it is referred to is a loader, especially a wheel loader. The only difference with the dump truck example is that this vehicle type enables the power generation module 18 to be fitted at the longitudinal rear end of the vehicle. As a result, the vehicle chassis extends (rearwardly) beyond the vehicle rear axle in order to define some receptacle for the power generation module 28. For the rest, the above description in relation with the embodiment of FIG. 1 to 7 applies, mutatis mutandis, to this other exemplary embodiment, which is why no more details are specified herein in relation with that embodiment.
Example 1: A heavy-duty vehicle, comprising an electric drive train, including at least one electric motor, an interface for fitting a power generation module, said interface comprising at least one electrical connector to connect said power generation module to the electric drive train, and a controller that is capable of adapting the energy received by the electrical connector, so that it is possible to select the power generation module to be fitted among a battery pack module, a battery swapping module, a fuel cell module and a thermal generator module.
Example 2. The heavy-duty vehicle according to Example 1, wherein the controller includes a communication system capable of receiving information from the power generation module.
Example 3. The heavy-duty vehicle according to Example 2, wherein said information includes at least one of the following parameters: voltage, power, state of charge, etc.
Example 4. The heavy-duty vehicle according to Example 2 or 3, wherein the electrical connector includes a line or channel dedicated for communicating with the power generation module.
Example 5. The heavy-duty vehicle according to any one of Examples 1 to 4, wherein said interface is provided at the longitudinal front end or rear end of the vehicle.
Example 6. The heavy-duty vehicle according to any one of Examples 1 to 5, further comprising a vehicle body and a chassis extending at the front beyond vehicle body so as to define a receptacle for the power generation module.
Example 7. The heavy-duty vehicle according to any preceding Example, wherein the controller includes a transformer and/or a converter, e.g. rectifier or inverter.
Example 8. The heavy-duty vehicle according to any preceding Example, wherein the vehicle is a construction equipment, such as a loader, dump truck or a hauler.
Example 9. The heavy-duty vehicle according to any preceding Example, wherein the vehicle comprises additionally a fuel tank, e.g. a Diesel tank or H2 tank, fitted at a remote location from the interface for fitting the power generation module.
Example 10. The heavy-duty vehicle according to Example 9, wherein the interface further comprises a fluid connector for fluidically connecting the fuel tank to the power generation module.
Example 11. The heavy-duty vehicle according to any preceding Example, comprising additionally an electrical storage system, such as a battery pack module or battery swapping module, fitted at a remote location from the interface for fitting the power generation module, wherein said electrical storage system can be used as power source for the electric drive train.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A heavy-duty vehicle (2), comprising:
- an electric drive train (36), including at least one electric motor (36a, 36b, 36c),
- an interface (5) for fitting a power generation module (18), said interface comprising at least one electrical connector (27, 27bis) to connect said power generation module to the electric drive train, and
- a controller (30) that is capable of adapting the energy received by the electrical connector, so that it is possible to select the power generation module to be fitted among a battery pack module, a battery swapping module, a fuel cell module and a thermal generator module.

2. The heavy-duty vehicle (2) according to claim 1, wherein the controller (30) includes a communication system capable of receiving information from the power generation module.

3. The heavy-duty vehicle (2) according to claim 2, wherein said information includes at least one of the following parameters: voltage, power, state of charge, etc.

4. The heavy-duty vehicle (2) according to claim 2 or 3, wherein the electrical connector (27, 27bis) includes a line or channel dedicated for communicating with the power generation module (18).

5. The heavy-duty vehicle (2) according to any one of claims 1 to 4, wherein said interface is provided at the longitudinal front end or rear end of the vehicle.

6. The heavy-duty vehicle (2) according to any one of claims 1 to 5, further comprising a vehicle body and a chassis extending at the front beyond vehicle body so as to define a receptacle for the power generation module (18).

7. The heavy-duty vehicle (2) according to any preceding claims, wherein the controller (30) includes a transformer (32) and/or a converter (34), e.g. rectifier or inverter.

8. The heavy-duty vehicle (2) according to any preceding claim, wherein the vehicle is a construction equipment, such as dump truck, a loader or a hauler.

9. The heavy-duty vehicle (2) according to any preceding claim, comprising additionally a fuel tank, e.g. a Diesel tank or H2 tank, fitted at a remote location from the interface for fitting the power generation module (18).

10. The heavy-duty vehicle (2) according to claim 9, wherein the interface further comprises a fluid connector for fluidically connecting the fuel tank to the power generation module (18).

11. The heavy-duty vehicle (2) according to any preceding claim, comprising additionally an electrical storage system, such as a battery pack module or battery swapping module, fitted at a remote location from the interface for fitting the power generation module (18), wherein said electrical storage system can be used as power source for the electric drive train (36a, 36b, 36c).

## Amended claims

### Amended claims in accordance with Rule 137(2) EPC.

1. A heavy-duty vehicle (2), comprising:
- an electric drive train (36), including at least one electric motor (36a, 36b, 36c),
- an interface (5) for fitting a power generation module (18), said interface comprising at least one electrical connector (27, 27bis) to connect said power generation module to the electric drive train, and
- a controller (30) that is capable of adapting the energy received by the electrical connector, so that it is possible to select the power generation module to be fitted among a battery pack module, a battery swapping module, a fuel cell module and a thermal generator module,
wherein said interface is provided at the longitudinal front end or rear end of the vehicle.

2. The heavy-duty vehicle (2) according to claim 1, wherein the controller (30) includes a communication system capable of receiving information from the power generation module.

3. The heavy-duty vehicle (2) according to claim 2, wherein said information includes at least one of the following parameters: voltage, power, state of charge, etc.

4. The heavy-duty vehicle (2) according to anyone of claims 2 or 3, wherein the electrical connector (27, 27bis) includes a line or channel dedicated for communicating with the power generation module (18).

5. The heavy-duty vehicle (2) according to any one of claims 1 to 4, further comprising a vehicle body and a chassis extending at the front beyond vehicle body so as to define a receptacle for the power generation module (18).

6. The heavy-duty vehicle (2) according to any one of preceding claims, wherein the controller (30) includes a transformer (32) and/or a converter (34), e.g. rectifier or inverter.

7. The heavy-duty vehicle (2) according to any one of preceding claims, wherein the vehicle is a construction equipment, such as dump truck, a loader or a hauler.

8. The heavy-duty vehicle (2) according to any one of preceding claims, comprising additionally a fuel tank, e.g. a Diesel tank or H2 tank, fitted at a remote location from the interface for fitting the power generation module (18).

9. The heavy-duty vehicle (2) according to claim 8, wherein the interface further comprises a fluid connector for fluidically connecting the fuel tank to the power generation module (18).

10. The heavy-duty vehicle (2) according to any one of preceding claims, comprising additionally an electrical storage system, such as a battery pack module or battery swapping module, fitted at a remote location from the interface for fitting the power generation module (18), wherein said electrical storage system can be used as power source for the electric drive train (36a, 36b, 36c).
